# EUROPEAN PATENT APPLICATION

(11) **EP 2 602 907 A2**
(43) Date of publication of application: **12.06.2013**
(21) Application number: 12195602.3
(22) Date of filing: 05.12.2012
(51) Int. Cl.: H02J 7/00

(54) **Charger with multi-sided arrangement**

(30) Priority: 05.12.2011 US 201113311325
(71) Applicant: New Well Wealth Creation Limited, Kowloon Hong Kong (CN)
(72) Inventor: Law, Hung Hi, Kowloon Hong Kong (CN)
(74) Representative: Dossmann, Gérard

(57) **Abstract**

A charger for a plurality of rechargeable batteries includes a charger housing, a charging circuitry and a multi-sided charging arrangement. The charger housing defines a connecting side, and a plurality of charging sides. The charging circuitry is supported by the charger housing. The multi-sided charging arrangement includes a charger connector movably mounted to the connecting side of the housing. The multi-sided charging arrangement also electrically connects the charging circuitry to an external AC power source. The multi-sided charging arrangement further contains a plurality of charging slots indently formed on the charging sides of the charger housing respectively, wherein each of the charging slots is arranged to accommodate one of the rechargeable batteries so that each of the charging sides is arranged to be used for charging the rechargeable batteries by connecting the charger connector to the external AC power source.

## Description

The present invention relates to a charger, and more particularly to a charger comprising a multi-sided charging arrangement, wherein rechargeable batteries can be accommodated on a plurality of charging sides of the charger for being recharged.

A conventional charger usually comprises a housing having a charging side, a charging circuitry received in the housing, wherein the charging side has a charging slot indently formed thereon for accommodating at least one rechargeable battery, such as a Ni-MH battery. The rechargeable battery is arranged to be detachably supported in the charging slot for recharging. The charging circuitry is electrically connected to an external power source, such as an external AC power source, wherein the externally acquired electrical power is utilized for charging the rechargeable battery.

A major disadvantage for this type of conventional charger is that conventional chargers such as the one described above usually has one single charging side only. Thus, the number of rechargeable batteries which can be simultaneously recharged is very limited because the single charging side can only have a limited area. Theoretically of course, the area of the charging side can be increased so as to accommodate many more rechargeable batteries. However, from the practical perspective, when the area of the charging side is increased, the overall size of the charger is also increased so that the charger will become very bulky and this substantially limits the range of applications of the charger.

This disadvantage has become particularly pressing when a charger needs to accommodate more than one type of rechargeable battery. As a matter of fact, conventional chargers have been developed in which a single recharger is capable of charging both Ni-MH type (i.e. AA/AAA size) rechargeable batteries as well as Li-ion battery. For this type of rechargeable batteries, the single charging side is designed to accommodate both the Ni-MH type battery and the Li-ion battery. This unique requirement makes the structure of the rechargeable battery very complicated. For example, some rechargeable batteries have various partitions in a single charging side and each partition may accommodate a predetermined rechargeable battery type.

Another disadvantage of the above-mentioned conventional charger is that when a manufacturer wishes to get a predetermined certification from a recognized authority, such as the well-known Geprüfte Sicherheit or "GS" certification mark for product safety, the manufacturer must submit the entire electric circuit to the designated authority for examination. The current practice is that when the manufacturer wishes to make even a slight amendment to a certified electric circuit, the manufacturer must re-submit an amended charging circuitry to the designated authority for re-certification. In other words, once a certification (such as the above-mentioned product safety certification) is obtained, the manufacturer must not amend the approved electric circuit. This brings a substantial trouble to the manufacturer because varying market conditions may require slight amendments to an approved or certified electric circuit.

A main object of the present invention is to provide a charger comprising a multi-sided charging arrangement, wherein rechargeable batteries can be accommodated on a plurality of charging sides of the charger for being recharged.

Another object of the present invention is to provide a charger comprising a multi-sided charging arrangement, wherein rechargeable batteries can be accommodated on a plurality of charging sides of the charger and can be conveniently and easily retrieved by the user of present invention.

Another object of the present invention is to provide a charger comprising a multi-sided charging arrangement, wherein a charger connector is movably mounted to a connecting side of a housing, and is arranged to electrically connect a charging circuitry to an external power supply.

Another object of the present invention is to provide a charger comprising a multi-sided charging arrangement, wherein a user is able to conveniently retrieve and accommodate rechargeable batteries from and to the charging sides of the housing even when the charger is electrically connected to the power source, such as an external AC wall socket.

Another object of the present invention is to provide a charger having a plurality of charging sides each equipped with at least one charging slot for charging a predetermined rechargeable battery. The charging slots may be operated to simultaneously recharge a plurality of rechargeable batteries even those rechargeable batteries are of different types. For example, the charger may simultaneously recharge a Ni-MH (AA/AAA size) rechargeable battery and a Li-ion rechargeable battery at two different charging sides respectively.

Another object of the present invention is to provide a charger comprising a multi-sided charging arrangement, wherein the charger housing and the charger connector can be selectively attached and detached for preventing a user from forgetting to bring either the charger housing or the charger connector, especially when he or she is on a trip or vacation.

Another object of the present invention is to provide a charger comprising a multi-sided charging arrangement, wherein a voltage conversion circuitry and a charging circuitry are separately accommodated in a charger connector adapter and a charger housing respectively so that a manufacturer of the present invention may make circuit amendment to the voltage conversion circuitry even when the charging circuitry has obtained a safety certification. In other words, the present invention allows the manufacturer to conveniently respond to changing market condition without bearing substantial additional costs.

Additional advantages and features of the invention will become apparent from the description which follows.

In order to accomplish the above objects, the present invention provides a charger for a plurality of rechargeable batteries, comprising:

a charger housing defining a connecting side, a plurality of charging sides and a receiving cavity formed within the charging sides;

a charging circuitry received in receiving cavity of the housing; and

a multi-sided charging arrangement, which comprises a charger connector which is movably and detachably mounted to the connecting side of the housing, and electrically connects the charging circuitry to an external AC power source, wherein the multi-sided charging arrangement further contains a plurality of charging slots indently formed on the charging sides of the charger housing respectively, wherein each of the charging slots is arranged to accommodate one of the rechargeable batteries so that each of the charging sides is arranged to be used for charging the rechargeable batteries by connecting the charger connector to the external AC power source.

Still further objects and advantages will become apparent from the description of the preferred embodiment of the present invention below and the accompanying drawings.

Fig. 1 is a perspective view of a charger according to a preferred embodiment of the present invention.

Fig. 2 is an exploded perspective view of the charger according to the above preferred embodiment of the present invention.

Fig. 3 is a block diagram of the charger according to the above preferred embodiment of the present invention.

Fig. 4A and Fig. 4B are schematic diagrams of a first alternative mode of the charger according to the above preferred embodiment of the present invention.

Fig. 5 is a second alternative mode of the charger according to the above preferred embodiment of the present invention.

Fig. 6A and Fig. 6B are schematic diagrams of a third alternative mode of the charger according to the above preferred embodiment of the present invention.

Fig. 7A and Fig. 7B are schematic diagrams of a fourth alternative mode of the charger according to the above preferred embodiment of the present invention.

Fig. 8A and Fig. 8C are schematic diagrams of a fifth alternative mode of the charger according to the above preferred embodiment of the present invention.

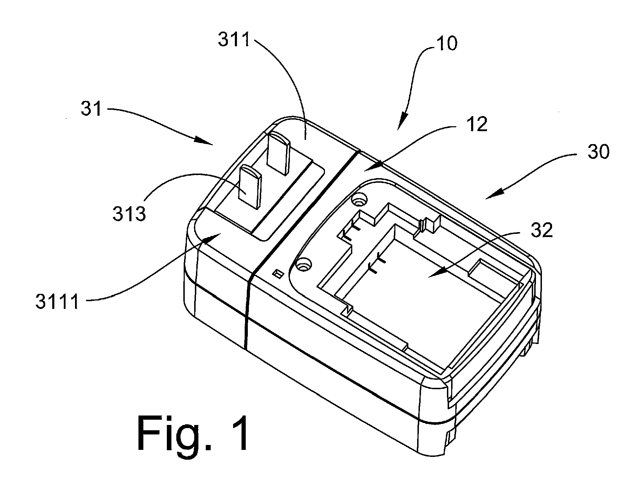

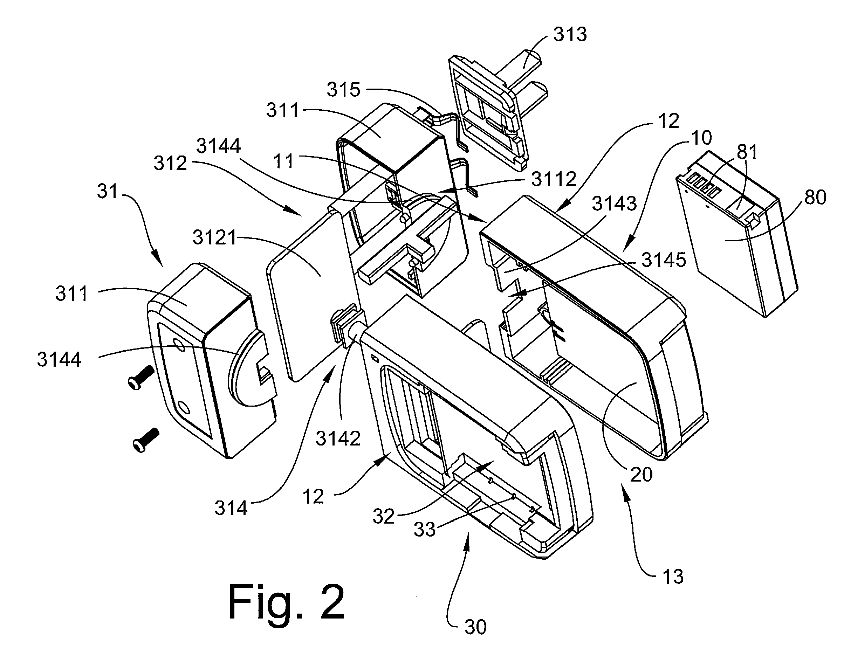

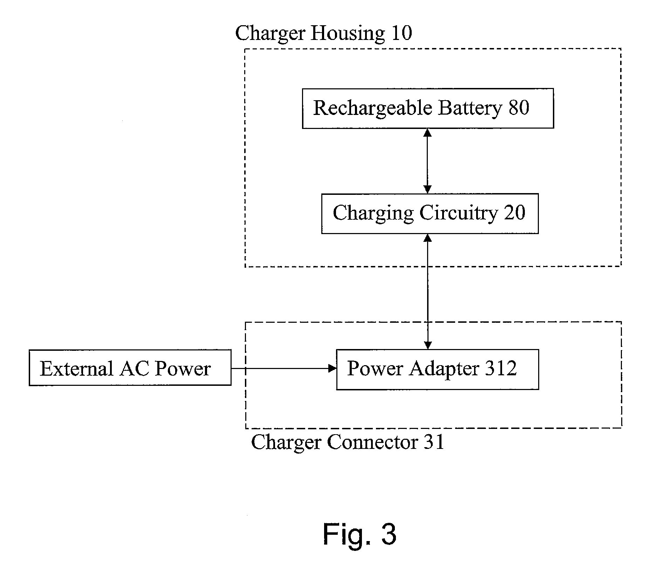

Referring to Fig. 1 to Fig. 3 of the drawings, a charger for a plurality of rechargeable batteries 80 according to a preferred embodiment of the present invention is illustrated, in which the charger comprises a charger housing 10, a charging circuitry 20, and a multi-sided charging arrangement 30.

The charger housing 10 defines a connecting side 11, a plurality of charging sides 12 and a receiving cavity 13 formed within the charging sides and the connecting side 11, wherein the charging circuitry 20 is received in receiving cavity 13 of the housing 10.

The multi-sided charging arrangement 30 comprises a charger connector 31 which is movably mounted to the connecting side 11 of the housing 10, and electrically connects the charging circuitry 20 to an external AC power source, wherein the multi-sided charging arrangement 30 further contains a plurality of charging slots 32 indently formed on the charging sides 12 of the charger housing 10 respectively, wherein each of the charging slots 32 is arranged to accommodate one of the rechargeable batteries 80 so that each of the charging sides 12 is arranged to be used for charging the rechargeable batteries 80 by connecting the charger connector 31 to the external AC power source.

According to the preferred embodiment of the present invention, the charger housing 10 is rectangular in shape in which the charging sides 12 are formed as the top and the bottom sides of the charger housing 10 respectively for accommodating the rechargeable batteries 80. It is important to point out that although there are two charging sides 12 in this particular embodiment, the number of charging sides 12 can be altered so that there may be three to four or even five charging sides 12 formed on the charger housing 10. These alternatives are described explicitly below. In other words, depending on the cross sectional shape of the charger housing 10, the number of charging sides 12 is corresponding to the number of side surfaces formed on the charger housing 10.

It is also worth mentioning that the charger of the present invention is arranged to charge a wide range of rechargeable batteries 80, such as Ni-MH batteries each having AA/AAA size, Li-ion batteries, or any other rechargeable batteries. Thus, each of the charging slots 32 is shaped and sized to correspond to a predetermined rechargeable battery 80 so that a user is able to conveniently accommodate that rechargeable battery 80 into the corresponding charging slot 32.

The multi-sided charging arrangement 30 further comprises a plurality of charging terminals 33 formed in the charging slots 32 respectively, wherein each of the charging terminals 33 is positioned to align with a corresponding battery terminal 81 of a corresponding rechargeable battery 80. Each of the charging terminals 33 is electrically connected to the charging circuitry 20 so that when the battery terminal 81 is accommodated in the corresponding charging slot 32, the corresponding battery terminal 81 is arranged to be in physical contact with the corresponding charging terminal 33 so as to electrically conduct the rechargeable battery 80 with the charging circuitry 20.

In this preferred embodiment, the charger connector 31 comprises a connector body 311 and a power adapter 312 received in the connector body 311 for converting AC power voltage input into a predetermined DC power output. The connector body 311 has a power acquiring side 3111 and a coupling side 3112 adapted for aligning with the connecting side 11 of the housing 10. Accordingly, the charger connector 31 further comprises a power plug 313 extended from the power acquiring side 3111 of the connector body 311, wherein the power plug 313 is arranged to detachably connect to an external AC power source, such as a wall AC socket, for acquiring AC power. Note that the power plug 313 is also electrically connected to the adapter 312 through a conductor 315 for acquiring external AC power for the adapter 3112, which converts the externally acquired AC power into DC power.

Furthermore, the charger connector 31 further comprises a coupling assembly 314 provided on the coupling side 3112 of the connector body 311 and is arranged to rotatably connect the connector body 311 with the connecting side 11 of the housing 10. In other words, the charger housing 10 is rotatably connected to the charger connector 31 through the coupling assembly 314.

The coupling assembly 314 comprises a rotor 3141 provided on the coupling side 3112 and a conducting shaft 3142 extended from the adapter 312 and penetrates through the rotor 3141 to electrically connect with the charging circuitry 20 received in the housing 10. In other words, the conducting shaft 3142 electrically conducts the DC output from the adapter 312 to the charging circuitry 20 for charging the rechargeable batteries 80.

More specifically, the rotor 3141 comprises a rotor base 3143 provided on the connecting side 11 of the charger housing 10, and a rotating wheel 3144 mounted on the coupling side 3112 of the connector body 311 and is rotatably coupled with the rotor base 3143 so that the rotor 3141 is capable of rotatably coupling the housing 10 with the connector body 311.

Moreover, the coupling assembly 314 further comprises a DC inlet 3145 provided on the connecting side 11 of the charger housing 10 on the rotor base 3143, wherein the conducting shaft 3142 is arranged to detachably connect to the DC inlet 3145 for electrically conducting the adapter 312 with the charging circuitry 20.

It is worth mentioning that, depending on the cross sectional shape of the connector body 311, the length of the power plug 313, and the cross sectional shape of the housing 10, the housing 10 can be rotated with respect to the connector body 311 through the coupling assembly 314 when the charger of the present invention is detached from the external AC power socket, and even when the charger is plugged onto the AC power socket.

On the other hand, the power adapter 312 comprises a voltage conversion circuitry 3121 mounted in the charger connector 31 for converting the externally acquired AC power into a predetermined DC output, which is then transmitted to the charging circuitry 20 for charging the rechargeable batteries 80.

Now, it is important to point out that when the charger of the present invention has got a desired certification, such as the above-mentioned "GS" safety certification, and when the manufacturer wishes to make slight amendment to the power adapter 312 (e.g. the voltage conversion circuitry 3121) of the charger, the manufacturer is not required to get a new certification for the charging circuitry 20. By accommodating the voltage conversion circuitry 3121 and the charging circuitry 20 separately, the manufacturer may make amendment to the voltage conversion circuitry 3121 without affecting the certification on the part of the charging circuitry 20.

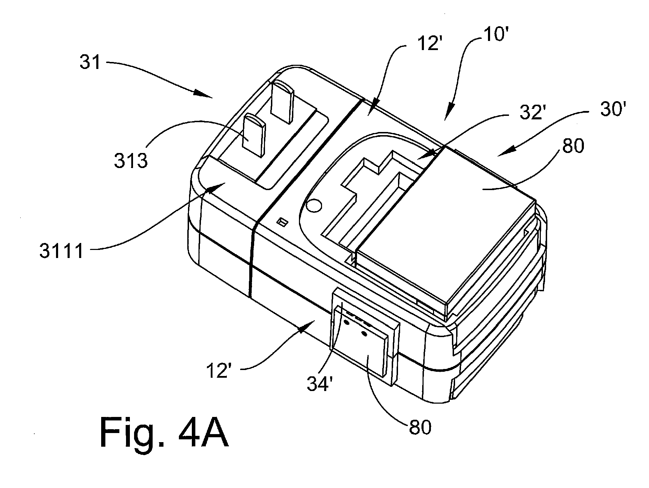

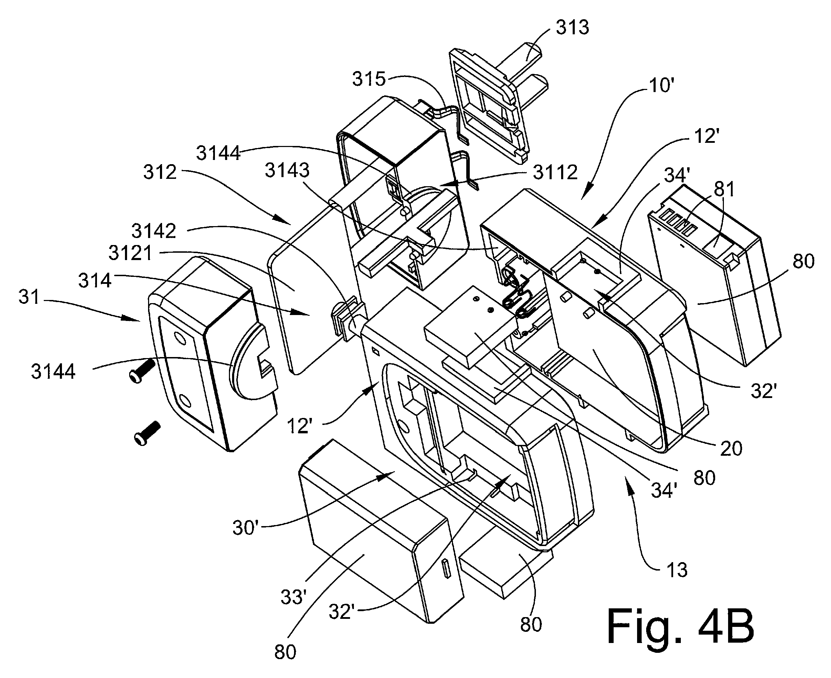

Referring to Fig. 4A and Fig. 4B of the drawings, a first alternative mode of the charger according to the preferred embodiment of the present invention is illustrated. The charger as shown in Fig. 4A and Fig. 4B is similar to the charger described in the preferred embodiment above except that there are more than two charging slots 32" formed on the charger housing 10'. More specifically, the first alternative mode illustrates four charging slots 32' and a corresponding number of charging terminals 33' formed therein respectively. Each of the charging slots 32' are arranged to accommodate one Li-ion rechargeable battery 80 and the charger as a whole is capable of simultaneously charging three rechargeable batteries 80. Note that the charging housing 10' comprises four charging sides 12' formed as a top side, a bottom side and two peripheral sides of the charging housing 10' respectively, wherein the charging slots 32' are formed on the four charging sides 12' respectively.

Thus, the multi-sided charging arrangement 30' further comprises a plurality of battery holders 34' provided on two peripheral sides of the charging housing 10', wherein two of the charging slots 32' are formed within the battery holders 34' respectively for fittedly holding two of the rechargeable batteries 80 respectively. More specifically, the two battery holders 34' are adapted for holding those two rechargeable batteries 80' which are not accommodated on the top side and the bottom side of the charger housing 10' respectively.

It is worth mentioning that the multi-sided charging arrangement 30' can actually contain three charging slots 32' instead of four charging slots 32' shown in Fig. 4A and Fig. 4B of the drawings. These variations are within the scope and spirit of the present invention.

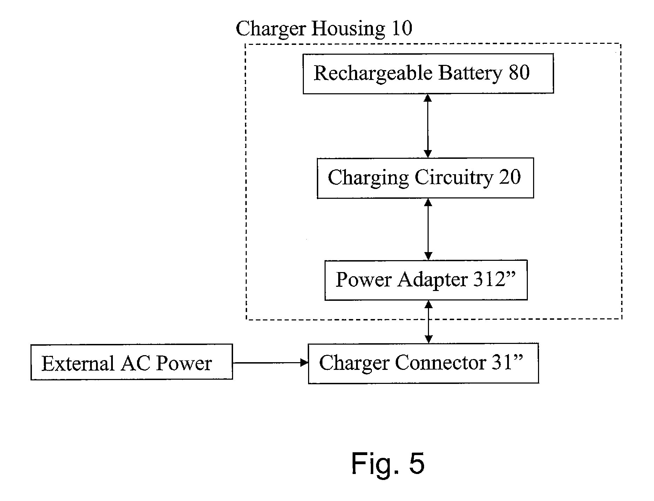

Referring to Fig. 5 of the drawings, a second alternative mode of the charger according to the preferred embodiment of the present invention is illustrated. The second alternative mode is similar to the preferred embodiment except that the power adapter 312" is also received in the charger housing 10. In other words, the charger connector 31" is movably mounted to the connecting side 11 of the housing 10, and serves as a bridge for electrically connecting the external AC power source to the charging circuitry 20. In this second alternative mode, both the charging circuitry 20 and the power adapter 312" are received in the charging housing 10.

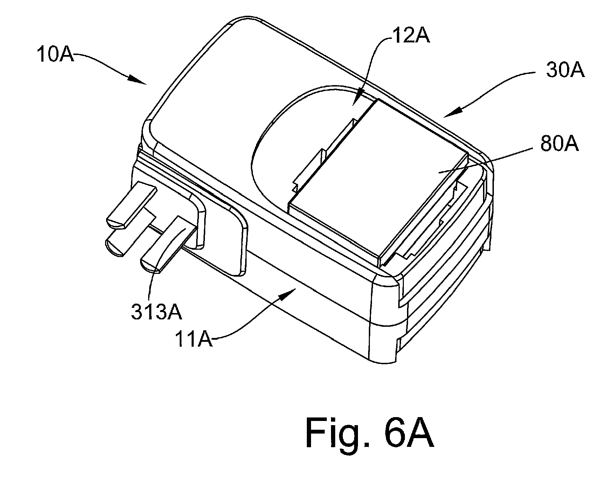

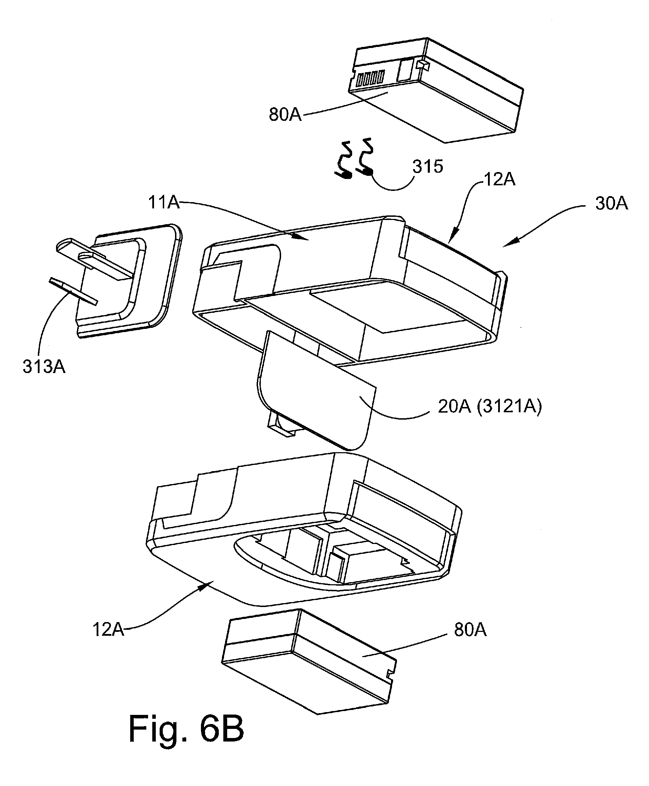

Referring to Fig. 6A to Fig. 6B of the drawings, a third alternative mode of the charger according to the preferred embodiment of the present invention is illustrated. The third alternative mode is similar to the preferred embodiment except the absence of the charger connector 31. According to the third alternative mode, the charger comprises a charger housing 10A defining a power side 11A for acquiring external AC power, and a plurality of charging sides 12A, a charging circuitry 20A supported by the charger housing 10A and a multi-sided charging arrangement 30A. The multi-sided charging arrangement electrically connects the charging circuitry 20A to an external AC power source, wherein the multi-sided charging arrangement 30A further contains a plurality of charging slots 32A indently formed on the charging sides 12A of the charger housing 10A respectively, wherein each of the charging slots 32A is arranged to accommodate one of the rechargeable batteries 80 so that each of the charging sides 12A is arranged to be used for charging the rechargeable batteries 80A by connecting the charger housing to the external AC power source. As shown in Fig. 6A of the drawings, the power plug 313A is extended from the power side 11A of the charger housing 10A for electrically connecting to the external AC power source.

In this particular embodiment, the charging circuitry 20A and the voltage conversion circuitry 3121A of the power adapter 312 are implemented on a single circuit board so that there is only one circuit board supported by the charger housing 10A.

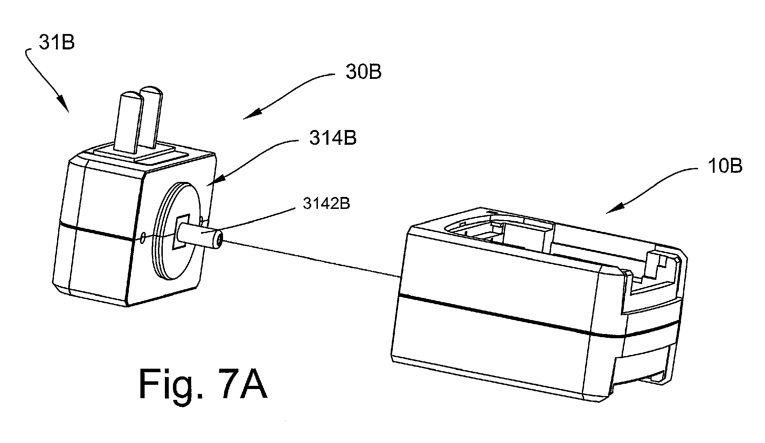

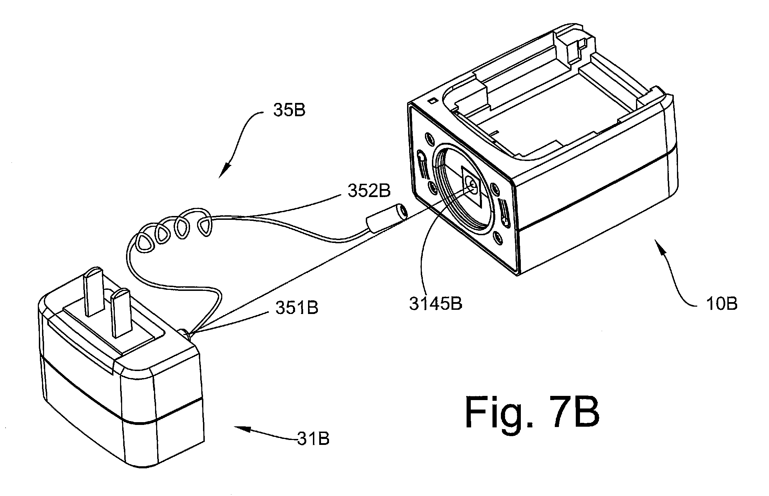

Referring to Fig. 7A and Fig. 7B of the drawings, a fourth alternative mode of the charger according to the preferred embodiment of the present invention is illustrated. The fourth alternative mode is similar to the preferred embodiment except the multi-sided charging arrangement 30B further comprises a power extension mechanism 35B provided between the charger housing 10B and the charger connector 31B for allowing the charger housing 10B to acquire electrical power positioned at a distance therefrom.

More specifically, the power extension mechanism 35B comprises a power connector 351B provided on the charger connector 31B, and a power cord 352B detachably extended between the power connector 351B and the DC inlet 3145B of the coupling assembly 314B, wherein the power connector 351B is electrically connected to the conducting shaft 3142B of the coupling assembly 314B, so that when the power cord 352B is connected to the power connector 351B and the DC inlet 3145B, the charging circuitry 20 may utilize the power acquired by the charger connector 31B which is positioned at a distance from the charger housing 10B to charge the rechargeable battery 80 accommodated in the charger housing 10B.

In this fourth alternative mode, a user of the present invention may conveniently plug the charger connector 31B to an external AC power source, and extends the charger housing 10B at a distance from the charger connector 31B, wherein the charger connector 31B and the charger housing 10B are detachably and selectively connected by the power cord 352B.

Thus, with this fourth alternative mode of this present invention, the rechargeable batteries may be recharged even though the charger housing 10B cannot be placed in the vicinity of the external AC power source. For example, when the charger connector 31B is plugged into an AC wall socket, the charger housing 10B can be put elsewhere and is electrically as well as physically connected by the power cord 352B.

At this point, it is important to point out that the charger connector 31 (31B) and the charger housing 10 (10B) may be selectively detached and attached for charging the rechargeable batteries 80. This feature prevents the user of the present invention from forgetting to bring either the charger connector 31 (31B) or the charger housing 10 (10B), especially when the user is on a trip or vacation, because the charger connector 31 (31B) are selectively attached for ease of storage and use, and may be selectively detached for use in a circumstance where the external AC power source is distant away from where the rechargeable batteries 80 should be recharged.

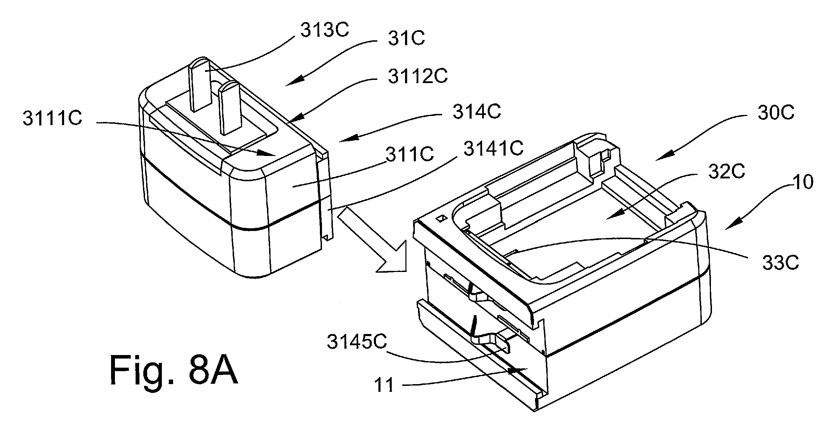

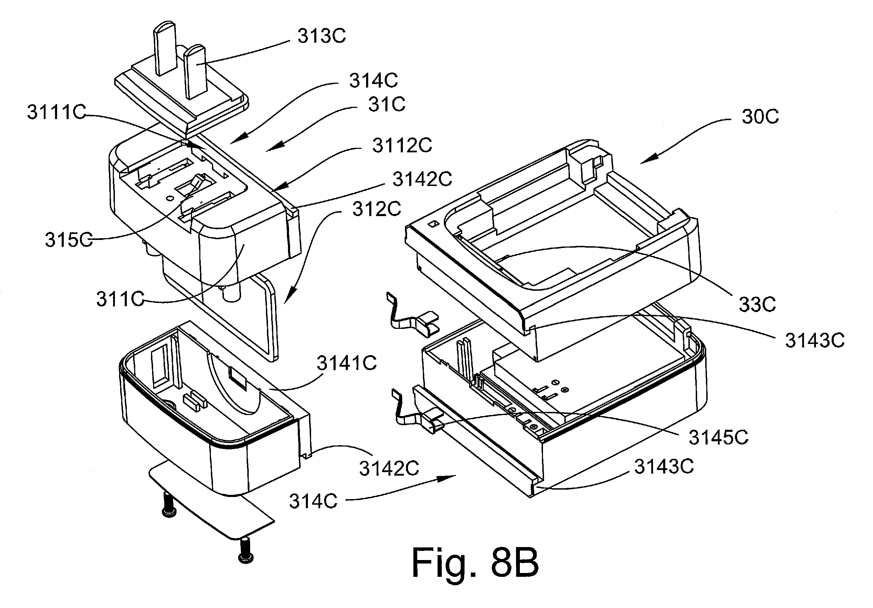

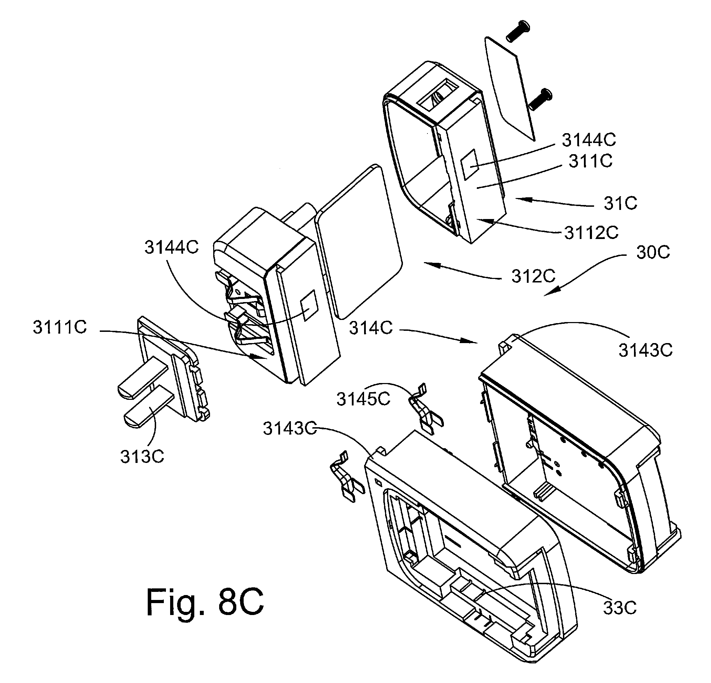

Referring to Fig. 8A to Fig. 8C of the drawings, a fifth alternative mode of the charger according to the preferred embodiment of the present invention is illustrated. The fifth alternative mode is similar to the preferred embodiment except the coupling assembly 314C of the multi-sided charging arrangement 30C. Thus, in this fifth alternative mode, the multi-sided charging arrangement 30C further comprises a plurality of charging terminals 33C formed in the charging slots 32C respectively, wherein each of the charging terminals 33C is positioned to align with a corresponding battery terminal 81 of a corresponding rechargeable battery 80.

The charger connector 31C comprises a connector body 311C and a power adapter 312C received in the connector body 311C for converting AC power voltage input into a predetermined DC power output. The connector body 311C has a power acquiring side 3111C and a coupling side 3112C adapted for aligning with the connecting side 11 of the housing 10. Accordingly, the charger connector 31C further comprises a power plug 313C extended from the power acquiring side 3111C of the connector body 311C, wherein the power plug 313C is arranged to detachably connect to an external AC power source, such as a wall AC socket, for acquiring AC power. The power plug 313C is also electrically connected to the adapter 312C through a conductor 315C for acquiring external AC power for the adapter 3112C.

Furthermore, the charger connector 31C further comprises a coupling assembly 314C provided on the coupling side 3112C of the connector body 311C and is arranged to slidably and detachably connect the connector body 311C with the connecting side 11 of the housing 10.

The coupling assembly 314C comprises a coupling member 3141C which is protruded from the coupling side 3112C of the connector body 311C and defines a plurality of elongated sliders 3142C formed at two sides of the coupling member 3141C respectively. Moreover, the coupling assembly 314C further comprises a plurality of sliding tracks 3143C formed at two side portions of the connecting side 11 of the charger housing 10 respectively, wherein the two elongated sliders 3142C are arranged to detachably slide into the sliding tracks 3143C for slidably and detachably connect the charger housing 10 with the charger connector 31C.

The coupling assembly 314C further comprises a plurality of first connectors 3144C provided on the coupling side 3112C of the connector body 311C, and a plurality of second connectors 3145C provided on the connecting side 11 of the charger housing, wherein the first connectors 3144C are aligned with the second connectors 3145C when the connector body 311C is slidably coupled with the charger housing 10 through the coupling assembly 314C (i.e. when the two elongated sliders 3142C are slidably inserted into the sliding tracks 3143C respectively). The first connectors 3144C are electrically connected to the power adapter 312C while the second connectors 3145C are electrically connected to the charging circuitry 20 in such a manner that when the connector body 311C is slidably coupled with the charger housing 10 through the coupling assembly 314C, the first and the second connectors 3144C, 3145C are in physical contact and they are arranged to conduct voltage output from the power adapter 312C to the charging circuitry 20.

One skilled in the art will understand that the embodiment of the present invention as shown in the drawings and described above is exemplary only and not intended to be limiting. The embodiments described above are for the purposes of illustrating the functional and structural principles of the present invention and is subject to change without departing from such principles. Therefore, this invention includes all modifications encompassed within the spirit and scope of the following claims.

## Claims

1. A charger for a plurality of rechargeable batteries, comprising:
a charger housing defining a connecting side, and a plurality of charging sides;
a charging circuitry supported by said charger housing; and
a multi-sided charging arrangement, which comprises a charger connector movably and detachably mounted to said connecting side of said housing, and electrically connects said charging circuitry to an external AC power source, wherein said multi-sided charging arrangement further contains a plurality of charging slots indently formed on said charging sides of said charger housing respectively, wherein each of said charging slots is arranged to accommodate one of said rechargeable batteries so that each of said charging sides is arranged to be used for charging said rechargeable batteries by connecting said charger connector to said external AC power source.

2. The charger, as recited in claim 1, wherein said charger housing is rectangular in shape and comprises two said charging sides, wherein said charging sides are formed as said top and said bottom sides of said charger housing respectively for accommodating said rechargeable batteries.

3. The charger, as recited in claim 2, wherein said multi-sided charging arrangement further comprises a plurality of charging terminals formed in said charging slots respectively, wherein each of said charging terminals is positioned to align with a corresponding battery terminal of said corresponding rechargeable battery, wherein each of said charging terminals is electrically connected to said charging circuitry so that when said battery terminal is accommodated in said corresponding charging slot, said corresponding battery terminal is arranged to be in physical contact with said corresponding charging terminal so as to electrically conduct said rechargeable battery with said charging circuitry.

4. The charger, as recited in claim 3, wherein said charger connector comprises a connector body and a power adapter received in said connector body for converting AC power voltage input into a predetermined DC power output, wherein said connector body has a power acquiring side and a coupling side adapted for aligning with said connecting side of said housing, wherein said charger connector further comprises a power plug extended from said power acquiring side of said connector body, wherein said power plug is arranged to detachably connect to an external AC power source and said adapter so as to serve as a conductor for conducting AC power for said adapter.

5. The charger, as recited in claim 6, wherein said charger connector further comprises a coupling assembly provided on said coupling side of said connector body and is arranged to rotatably connect said connector body with said connecting side of said housing, so that said housing is rotatably connected to said charger connector through said coupling assembly.

6. The charger, as recited in claim 5, wherein said coupling assembly comprises a rotor provided on said coupling side and a conducting shaft extended from said adapter and penetrates through said rotor to electrically connect with said charging circuitry received in said housing.

7. The charger, as recited in claim 6, wherein said rotor comprises a rotor base provided on said connecting side of said housing, and a rotating wheel mounted on said coupling side of said connector body and is rotatably coupled with said rotor base so that said rotor is capable of rotatably coupling said housing with said connector body.

8. The charger, as recited in claim 7, wherein said power adapter comprises a voltage conversion circuitry mounted in said charger connector for converting said externally acquired AC power into a predetermined DC output, which is then transmitted to said charging circuitry for charging said rechargeable batteries.

9. The charger, as recited in claim 8, wherein said power adapter comprises a voltage conversion circuitry mounted in said charger connector for converting said externally acquired AC power into a predetermined DC output, which is then transmitted to said charging circuitry for charging said rechargeable batteries.

10. The charger, as recited in claim 9, wherein said multi-sided charging arrangement further comprises a power extension mechanism provided between said charger housing and said charger connector for allowing said charger housing to acquire electrical power positioned at a distance therefrom.

11. The charger, as recited in claim 10, wherein said power extension mechanism comprises a power connector provided on said charger connector, and a power cord detachably extended between said power connector and said charger housing, wherein said power connector is electrically connected to said conducting shaft of said coupling assembly, so that said charging circuitry is capable of utilizing said power acquired by said charger connector which is positioned at a distance from said charger housing to charge said rechargeable battery accommodated in said charger housing.

12. The charger, as recited in claim 5, wherein said coupling assembly comprises a coupling member which is protruded from said coupling side of said connector body and defines a plurality of elongated sliders formed at two sides of said coupling member respectively, wherein said coupling assembly further comprises a plurality of sliding tracks formed at two side portions of said connecting side of said charger housing respectively, wherein said two elongated sliders are arranged to detachably slide into said sliding tracks for slidably and detachably connect said charger housing with said charger connector.

13. The charger, as recited in claim 12, wherein said coupling assembly further comprises a plurality of first connectors provided on said coupling side of said connector body, and a plurality of second connectors provided on said connecting side of said charger housing, wherein said first connectors are aligned with said second connectors when said connector body is slidably coupled with said charger housing, wherein said first connectors are electrically connected to said power adapter while said second connectors are electrically connected to said charging circuitry in such a manner that when said connector body is slidably coupled with said charger housing through said coupling assembly, said first and said second connectors are in physical contact and are arranged to conduct voltage output from said power adapter to said charging circuitry.

14. The charger, as recited in claim 11, wherein said charger housing further has one charging side, wherein said charging sides are formed as said top side, said bottom side and a peripheral side of said charger housing respectively for accommodating said rechargeable batteries and for charging said rechargeable batteries simultaneously.

15. The charger, as recited in claim 13, wherein said charger housing further has one charging side, wherein said charging sides are formed as said top side, said bottom side and a peripheral side of said charger housing respectively for accommodating said rechargeable batteries and for charging said rechargeable batteries simultaneously.
